(19) **Europäisches Patentamt / European Patent Office / Office européen des brevets**

(11) **EP 4 682 773 A1**

(12) **EUROPEAN PATENT APPLICATION**

(43) Date of publication:
21.01.2026 Bulletin 2026/04

(21) Application number: 24189429.4

(22) Date of filing: 18.07.2024

(51) International Patent Classification (IPC):
**G06N 3/098** (2023.01)     **G06N 20/00** (2019.01)

(52) Cooperative Patent Classification (CPC):
**G06N 3/098; G06N 20/00;** G06N 3/088;
G06N 3/0895; G06N 3/09

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Cognivity AI Sweden AB**
**431 39 Mölndal (SE)**

(72) Inventor: **FLEISCHER, Christian**
**431 39 Mölndal (SE)**

(74) Representative: **Lind Edlund Kenamets**
**Intellectual Property AB**
**Kungsportsavenyn 25**
**411 36 Göteborg (SE)**

(54) **DECENTRALISED MACHINE LEARNING FRAMEWORK FOR BATTERY SYSTEMS**

(57)     The present disclosure relates to a method for decentralized machine learning for a group of battery systems. The method comprises, for each battery system, training a system-specific machine learning, SSML, comprising two submodules, a general SSML submodule and a personalized SSML submodule, each submodule comprising a plurality of learnable parameters. The method further comprises sending the learned parameters of the general SSML submodule to a remote server and combining the learned parameters of a plurality of general SSML submodules into a group general SSML submodule. The method further comprises determining, sending the update data to a specific battery system in the group of battery system and modifying the parameters of the general SSML submodule in the specific battery system based on the update data to form a modified SSML model. Finally, the method comprises processing data using the modified SSML model to generate a predicted battery metric.

Fig. 1

**Description**

TECHNICAL FIELD OF THE INVENTION

The present invention relates to a method and system for decentralized machine learning for a plurality of individual battery systems, particularly to battery systems provided electric vehicles, such as battery powered road vehicles or hybrid road vehicles.

BACKGROUND OF THE INVENTION

Over the past decade, electric vehicles, and especially electric road vehicles such as cars, trucks and buses have become increasingly popular. Today electric vehicles (or partially electrified hybrid vehicles) constitute a significant portion of both the private and commercial transportation sector. Most types of electric vehicles utilize a rechargeable battery (e.g. a lithium-ion battery) as the main energy storage device and while battery technology is the subject of extensive research, electric vehicles typically feature a considerably shorter and varying driving range compared to their fossil-fuel based counterparts.

Additionally, high-capacity rechargeable batteries (such as those used in electric cars) are large and complicated systems, typically consisting of thousands of battery elements (often referred to as cells) wherein each high-capacity battery system is unique and exhibits unique electric properties and unique aging properties depending on how the high-capacity battery system is discharged, recharged, the environmental temperature during discharge/recharge etc. Consequently, it is generally challenging to accurately predict how a battery in e.g. an electric vehicle will be discharged during a trip from one destination to another, leading to unreliable range estimates which causes inconvenience for the driver. For example, a trip which initially was predicted by a range estimation function to require no charging stop may turn out to require a charging stop while enroute to the destination, which could cause unpredicted and inconvenient delays, or even leave the vehicle stranded if no charging station is available along the route.

While prediction of various battery characteristics for battery systems is important for battery powered vehicles, similar problems are also observed in other sectors where battery systems are used, such as in aerospace, marine, military, consumer electronics or stationary battery systems (e.g. for private homes and stabilization of the utility grid).

To provide more reliable and accurate models of the dynamics of a battery system various machine learning algorithms have been proposed. For example, for modern connected vehicles solutions have been proposed where each vehicle in a vehicle fleet transmits vehicle data such as GPS coordinates, target destination, driving history, driving behavior, temperature, current charge level etc. to a remote server where a machine learning model is implemented in the remote server to gain insights of the characteristics of the battery system in the vehicles. The machine learning model may then be used to develop more accurate functions for predicting battery metrics (e.g. future state of charge, future range remaining, state of health, etc.) that may be implemented in the next generation of battery systems. A benefit of this solution is that a large and complicated machine learning model (e.g. a Deep Neural Network) can be implemented in the remote server and over time enable accurate modelling of the battery systems. Another benefit is that due to the large number of connected vehicles sharing data with the remote server, large amounts of data become available for the remote server which facilitates training and model accuracy.

A disadvantage is however that all vehicles may not always be able to establish a connection to the remote server and, in many markets, there are data privacy regulations that prevents some types of vehicle information which is highly useful for training (e.g. GPS coordinates or driving history) from being shared. Additionally, the large amounts of data transmitted to the remote server are typically costly to store and cumbersome to manage. Furthermore, the resulting range estimation functions that can be extracted from the machine learning model will be very general, providing on average a small error for many drivers and vehicles, but providing larger errors for some drivers and vehicles with e.g. more specific driving habits. Additionally, the current generation of vehicles may not benefit from the learned insights of the machine learning model.

Another solution is providing a full machine learning model for battery metric prediction in each device (i.e. vehicle, stationary battery etc.) directly. While this solution may remove the requirement of sharing data with a remote server entirely, the disadvantages include being restricted to simpler machine learning models (e.g. that can run on limited onboard vehicle hardware) and being restricted to limited amounts locally available training data which will make the model highly personalized with poor performance for any new situation which has not previously been encountered during the local training.

SUMMARY OF THE INVENTION

There is a need for a new and improved method and processing system for predicting more accurate battery metrics (e.g. range estimates) for battery systems which overcomes at least some of the drawbacks of existing solutions mentioned above. It is a purpose of the present disclosure to present such a method, and a processing system for predicting a battery metric for a battery system.

According to a first aspect of the invention there is provided a method for decentralized machine learning for a group of battery systems. The method comprises for each battery system, in the group of battery systems, training a system-specific machine learning, SSML, model with training data comprising personalized system data. The SSML model comprises two submodules, a general SSML submodule and a personalized SSML submodule, each submodule comprising a plurality of learnable parameters. The method further comprises sending, from each battery system in the group, the learned parameters of the general SSML submodule to a remote server and combining, at the remote server, the learned parameters of a plurality of general SSML submodules into a group general SSML submodule. The method further comprises determining, based on the group general SSML submodule, a set of updated parameters, sending the updated parameters to a specific battery system in the group of battery systems, and modifying the parameters of the general SSML submodule in the specific battery system based on the updated parameters to form a modified SSML model. The method further comprises processing, in the specific battery system, training data using the modified SSML model to generate output coefficients representing a predicted battery metric.

By training the SSML model locally in each battery system using personalized data the SSML model becomes personalized and incrementally better suited for making accurate predictions of the predicted battery metric. At the same time, by sending the learned parameters of the general SSMl, submodule to the remote server the learned parameters from the general SSML submodule of multiple battery systems are combined in the remote server to create a group general SSML submodule which combines the "insights" learned from each general SSML submodule in the group of battery systems. Hereby, a group general SSML model is obtained effectively, which leverages the individual training of general SSML modules from the entire group of battery systems. Since there are multiple battery systems in the group, each battery system contributing to the build-up of the group general SSML submodule, the group general SSML submodule will rapidly become more and more accurate. It is also understood that in general, the learnable parameters of the general SSML submodule in each battery system will differ slightly from each other, whereby the group general SSML submodule represents the aggregate of all general SSML submodules in the group.

Another benefit of transmitting the learned parameters to the remote server, and not the personalized data directly, is that in many implementations less data frames is transmitted. This reduces the bandwidth requirement between each battery system and the remote server.

Yet another advantage is that it is possible to avoid transmission of personalized data (which may comprise sensitive information) to the remote server. The learned parameters of the general SSML as such does not contain any sensitive, personal or private information and nor can the learned parameters be used to recreate the potentially personalized data used during the training in each individual battery system. At the same time, the learned parameters represent (a part) of the SSML model which has been iteratively improved by the training process in each battery system.

To make use of the general group SSML submodule in each battery system, update data (comprising e.g. the parameters of the general group SSML submodule) is extracted and transmitted from the remote server to a specific battery system (e.g. regularly or upon request by the specific battery system). Using the update data, the parameters of the general SSML submodule in the specific battery system may be updated. Since the update data is based on the group general SSML submodule (being the aggregate of all general SSMl, submodules in the group) the SSML model of the specific battery system will benefit from the learned insights of all other battery systems in the group, and be able to predict more reliable and accurate battery metrics.

Accordingly, the method according to the first aspect of the invention leverages decentralized learning for improving local SSMl, models implemented in each battery system. At the same time the method reduces the amount of data that needs to be transmitted and avoids conveying any personalized data between the remote server and the battery systems.

In some implementations, each battery system is an at least partially battery powered vehicle (a road vehicle, an airborne vehicle, a seafaring vehicle, a drone, a rail vehicle) or a stationary battery system (e.g. a battery pack used to balance the utility grid or used to temporality store electrical energy in a home).

With the term parameters it is meant the weights, biases, and/or hyperparameters of machine learning module.

In some implementations, the step of training the SSML model comprises, obtaining the training data, providing the training data as input to the SSML model, generating, with the SSML model, output coefficients representing the predicted battery metric and recording a ground truth battery metric associated with the predicted battery metric. The step of training the SSML model further comprises updating the learnable parameters of the SSML model based on a difference between the ground truth battery metric and the predicted battery metric.

Hereby, the training of the SSML model may be performed repeatedly in each battery system whereby the SSML model learns to predict progressively more accurate battery metrics. That is, the SSML model of each battery system may be implemented as an "online" model which generates predictions useful for the battery system at the same time as it is trained. Training of machine learning models, and even online training, is as such known in the art.

The step of updating the learnable parameters may comprise computing a gradient (using e.g. stochastic gradient decent), and updating learnable parameters based on the gradient and a measure of the error between the predicted and the ground truth battery metric.

As an example, a situation is considered where the battery system is a battery powered road vehicle (such as a car). The training data may then comprise trip data describing a trip the driver has entered into the navigation system and the predicted battery metric is a predicted charge level (e.g. expressed in percent) that will remain when the vehicle reaches the trip destination. Upon reaching the trip destination the actual battery charge level may be accessed whereby the actual battery charge level constitutes the ground truth battery metric that may be used for the training. The training may occur during the entire the trip. For example, the trip may be portioned into segments and the training is repeated for each segment with a predicted battery metric predicted at the start of each segment and a ground truth battery metric accessible at the end of each segment. In response to there being a deviation from the prediction, the learning framework will restart.

In some implementations, combining the learned parameters of a plurality of general SSML submodules comprises forming an average of the learned parameters from different battery systems or a weighted average of the learned parameters from different battery systems.

Hereby, the learned parameters of multiple battery systems may be efficiently combined into the group general SSML submodule which aggregates the learning from multiple battery systems belonging to the group. Combining may involve calculating a mean, variance or other distribution metrics of the learned parameters. As described below, the group may comprise battery systems operating under similar circumstances (e.g. battery powered vehicles with similar driving pattern and environmental conditions) the battery systems may be assumed to have homogenous learnable parameters suitable for combining.

The weighting in the weighted average may be based on the amount of training that has been performed for the respective battery system. For example, learned parameters from a battery system which has performed a larger number of training iterations may be provided with a larger weight and learned parameters from a battery system which has performed a smaller number of training iterations may be provided with a smaller weight. As another example, the weighting is based on the amount of, or the distribution of, training data each battery system has processed, with greater amounts of training data or a greater distribution of the training data being associated with greater weights. Metrics indicating the amount of training iterations, amount of training data or training data distribution for each battery system may be provided to the remote server as side information.

In some implementations, modifying the parameters of the general SSML submodule in the specific battery system based on the update data comprises at least one of changing the parameters of the general SSML submodule in the specific battery system by setting the parameters of the general SSMI, submodule to parameters of the update data, changing the parameters of the general SSML submodule in the specific battery system by modifying the parameters of the general SSML with a gradient of a difference between the parameters of the update data and a previous set of parameters of the general SSML submodule, setting the parameters of the general SSMI, submodule to a combination of a previous set of parameters of general SSML submodule and the parameters of the update data and training the SSML model with a loss function, the loss function imposes a penalty proportional to a deviation from the parameters of the update data.

Even though the parameters of the general SSML module in each battery system of a group may be expected to be homogenous it is advantageous to update the parameters of the general SSML module in each battery system in a suitable and careful manner to not cause problems with predictions after updating. While direct replacement of the parameters of the general SSML submodule in a battery system with the parameters of the group general SSML submodule (signaled in the update data) is envisaged it is also possible to update by interpolating between the current (not updated) parameters of the general SSML submodule in the battery system and the parameters of the group general SSML submodule, wherein the latter example is a gradual update procedure with less risk of introducing prediction problems. Using the parameters of the group general SSML submodule to govern a penalty in the loss function used during training is another alternative which achieves gradual parameter updates while being considerate of the fact that the SSML model should not be disrupted too much. This penalty provides a greater loss for updating the parameters in a way which deviates from the parameters of the group general SSML submodule. Hereby, the parameters are not directly updated based on the parameters of the group general SSML submodule, but rather used to guide the future training performed in the battery system.

In some implementations the general SSML submodule is arranged upstream of the personalized SSMI, submodule in each SSMI, model, wherein input data provided to the SSML model is processed first with the general SSMI, submodule to yield intermediate data, and wherein the intermediate data is provided to the personalized SSML model which generates output coefficients representing the predicted battery metric.

In many machine learning models, submodules arranged upstream are generally more important for the accuracy of high-level, long-term, predictions whereas the submodules arranged downstream are more important for the accuracy of low-level, short-term, predictions. By placing the general SSML submodule upstream of the personalized SSML module the general SSML submodule is expected to become most important for formulating the final prediction based on long-term aspects, such as battery state-of-health, whereas the personalized SSML submodule is expected to become most important for formulating the final prediction based on short-term aspects, such as driver behavior (if the battery system is a vehicle battery system). It is also the general SSML submodule which will benefit the most from the generalization brought by combining multiple general SSML submodule on the group level meaning that this interrelationship between the general and personalized SSML module facilitates learning on the group level. By only sending the parameters of the general SSML submodule (and not the personalized SSMI, submodule) the bandwidth requirements are reduced and the SSMI, retains its learned personalization (in the personalized SSML submodule) throughout the online training.

For example, when the battery systems are battery powered road vehicles the personalized SSMI, submodule will mainly be influenced by capacity fade, charging habits and driver behavior, whereas the general SSML submodule will mainly be influence by voltage response, SoC, temperature effects, and characteristics in response to vehicle load changes.

According to a second aspect of the intention there is provided a method for performing decentralized machine learning for a fleet of battery systems. The method comprises sending, from each battery systems in the fleet of battery systems, general data to the remote server, and at the remote server, clustering the battery systems in the fleet of battery systems into a plurality of first tier groups based on the general data of each battery systems. The method further comprises performing the method according the first aspect for each first tier group of said plurality of first tier groups such that battery systems assigned to a same first tier group contribute to the formation of the first tier group general SSML submodule and receive updated data based on the first tier group general SSML submodule.

By clustering a fleet of battery systems into two or more first tier groups and maintaining an individual instance of the group general SSML submodule for each first tier group, it is possible to provide even more relevant and accurate updated parameters to each battery system.

By clustering the battery system into a plurality of first tier groups based on general data, each first tier group comprising at least two battery systems and each battery system belonging to a single first tier group, each instance of the first tier group general SSML submodule may become more specific and tailored after the battery system in the first tier group, benefiting the prediction accuracy of all SSML models of battery systems of that first tier group, without impeding the accuracy of other first tier groups. By comparison, using a single group for all battery systems may lead to a too generic group general SSML submodule which achieves fair accuracy on average, but also often results in poor accuracy predictions. Notably, the clustering is performed based on the general data which is more generic and of greater importance for clustering. Additionally, no sensitive or private information is shared with the remote server.

The general data may comprise features that describe the distribution of some data associated with the battery systems. The general data may be long term data, averages over multiple charge/discharge cycles or static data (e.g. battery design capacity, number of battery cells etc.) that is useful for grouping the battery systems into groups with similar characteristics. These features may be generalizations of data gathered for each battery system (e.g., mean charge level, variance in temperature, etc.) or more complex representations learned through local models.

As a simple illustrative example, an implementation is considered where the battery systems are battery powered road vehicles. The general (vehicle) data indicates a country of registration for each vehicle, and the clustering is performed such that vehicles with the same country of registration are placed in the same first tier group. Since the traffic situation, road infrastructure, driving patterns etc. may generally differ from country to country, the first tier group general VSML (vehicle-specific machine learning) submodule of each first tier group will in this example become better adapted for each individual country. For example, vehicles registered in Norway may on average travel more along winding and hilly roads compared to vehicles registered in the Netherlands and there are benefits both in terms of learning rate and prediction accuracy with forming the group general VSML submodule for Norwegian vehicles using other Norwegian vehicles and forming the group general VSMI, submodule for vehicles in the Netherlands using other vehicles in the Netherlands.

Of course, the first tier groups of this illustrative example are merely two examples of many types of first tier groups envisaged in the present disclosure, and the clustering may be more generic and implemented without regard to national borders as will be described below. For example if clustering is performed based on ambient temperature, driving behavior and charging habits vehicles from many different countries may be clustered together into a single first tier group.

In some implementations, the plurality of first tier groups is partitioned into at least two second tier groups based on the general data. The method further comprises, for each second tier group, combining the parameters of each first tier group general SSML submodule of a first tier group associated with the second tier group, into a second tier group general SSML submodule, determining, based on the second tier group general SSML submodule, a set of first tier update parameters and modifying the first tier group general VSMI, submodule based on the first tier updated parameters.

Hereby, the second tier groups, the first tier groups, and the battery systems form a hierarchical structure aggregating progressively more general SSML submodules for the higher tiers, which facilitates learning rate at all tiers while still allowing each group to be specialized for battery systems associated with the general data characteristic for that specific group. Of course, it is envisaged that more than two tiers of groups could be used, and in practical implementations there may be more than two, more than three or more than ten tier levels. In general, a lower tier level may comprise a higher number of groups than the next higher tier layer. That is, tier level N has a larger number of groups than tier level N + 1, wherein N is a positive natural number equal to or greater than 1.

In some implementations, the method further comprises combining the parameters of a plurality of first tier group SSML submodules into a global SSMI, submodule, wherein the update data is further based on the parameters of the global SSMI, submodule.

Hereby, the global general SSML submodule may be used when determining the update data to e.g. to bias the updates towards higher levels of generalization which otherwise is more difficult to learn locally for each battery system. When multiple tier levels are used, the global general SSML submodule may be the general SSML submodule of a highest tier level, the highest tier level having a single tier group. In a multi-tier setup the update of each group general SSML module may be biased by one or more general SSML modules of higher tier levels, to enforce an increased level of generalization for higher tier levels.

In some implementations, the method comprises initializing the general SSML submodule with parameters from the global SSMI, submodule or from a first tier group general SSML submodule.

Hereby a battery system may be provided with a general SSML submodule from the start which is expected to handle most situations. If no general data has been shared with the remote server, allowing the vehicle to be allocated a first tier group, the parameters of the global model are used to initialize the general SSML submodule. If the general data is available, the parameters of the best matching first tier group (or a higher tier group) are used to initialize the general VSML submodule.

In some implementations, the method further comprises in each battery system of the fleet of battery systems, extracting general data by generalizing and/or anonymizing personalized data, wherein generalizing and/or anonymizing personalized data comprises at least one of removing personal identifiers from the personalized data, augmenting and/or permutating the personalized data, removing exact location information from the personalized data and computing a statistical generalization of the personalized data.

Accordingly, personalized data may be anonymized to form general data which is transmitted to the remote server. This facilitates generation of more general data which may be used to perform more accurate clustering of the battery systems into groups (of one or more tier levels).

Notably, in some implementations, the clustering is performed to assign battery systems with similar general data to a same first tier group and assign battery systems with dissimilar general data to different first tier groups. This ensures that battery systems that are similar, or used during similar circumstances, are clustered to the same group which facilitates learning.

In some implementations, the battery system is a battery powered road vehicle and wherein the general vehicle data comprises at least one of: an average environmental temperature, an average environmental humidity level, a vehicle model, a country in which vehicle is registered, a battery model, a battery design capacity, generalized driving behavior metric, a generalized charging habit metric, an average daily usage metric, an average trip length, an average speed, the body type of the vehicle, a total vehicle milage, learned parameters of the general VSML submodule, and information regarding how the general VSML was updated during a training iteration. Of course, other types of information may also be used to form the general data. Importantly, the general data comprises generalized or averaged information that may be used to identify other battery systems used under similar circumstances.

In some implementations, each battery system is a battery powered vehicle, and the predicted battery metric is at least one of: a predicted future battery charge level, a predicted future driving range, a battery state-of-health, a remaining useful life, a future battery state-of-power, a remaining charge time and a maximum charging power.

Hereby, the predicted battery metric is associated with the battery of the at least partly battery powered vehicle and/or how the battery is predicted to be discharged or charged. Accurate predictions of these metrics are crucial for making battery powered and hybrid vehicles convenient to use.

In some implementations, each battery system is a battery powered vehicle and the personalized data comprises at least one of: a current battery voltage level, a current battery current level, a battery temperature, a battery state of charge, a battery charge cycle count, a battery internal resistance, a battery power output, a vehicle speed, a road gradient, road ascent level, road decent level, a vehicle load, a number of passengers, wind speed, a current temperature and a current humidity.

According to a third aspect of the present invention there is provided a battery controller for a battery system, the battery controller comprises a processor and memory. The battery controller is configured to train a system-specific machine learning, SSML, model with training data comprising private data, the SSML model comprising two submodules, a general SSML submodule and a personalized SSML submodule, each submodule comprising a plurality of learnable parameters, and send the learned parameters of the general SSML submodule to a remote server located externally of the battery system. The battery controller is further configured to receive, from the remote server, update data, modify the parameters of the general SSML submodule based on the update data to form a modified SSML model, and process training data using the modified SSML model to generate output coefficients representing a predicted battery metric.

In general, features of the second aspect provide similar advantages as discussed above in relation to the first aspect. Consequently, said advantages will not be repeated in order to avoid undue repetition.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for the purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

BRIEF DESCRIPTION OF THE DRAWINGS

The above and other aspects of the present inventive concept will now be described in more detail, with reference to appended figures showing embodiments or variants of the inventive concept. The figures should not be considered limiting, instead, they are used for explaining and understanding. Like reference numerals refer to like elements throughout.

Figure 1 illustrates a plurality of vehicles, each employing an individual vehicle specific machine learning, VSML, model, communicating with a remote server.

Figure 2 is a block diagram, illustrating a VSML model in more detail.

Figure 3 is a flowchart, describing a method for performing decentralized learning for a group comprising a plurality of vehicles.

Figure 4a illustrates a vehicle sending information associated with its general VSML submodule to the remote server.

Figure 4b illustrates the remote server sending update data associated with group general VSML submodule to the vehicle.

Figure 5 illustrates multi-tier clustering of a vehicle fleet, according to some implementations.

Figure 6 is a flowchart, describing a method for training a VSML model in a vehicle.

Figure 7a illustrates a vehicle travelling along a route, from a first position to a second position.

Figure 7b illustrates a vehicle having reached a second position from a first position, after travelling along a route.

Figure 8 is a block diagram illustrating a vehicle implementing a VSML model and communicating with the remote server, according to some implementations.

DETAILED DESCRIPTION

The method of the present disclosure may be implemented on a plurality of battery systems, wherein each battery system is configured to communicate with a remote server. Each battery system in a group or fleet are of the same type and it is appreciated that the term "battery system" is broadly used to refer to any type of battery system such as battery powered vehicles or stationary batteries for home use or used to stabilize the utility grid. In the detailed description below, it will be assumed that the battery systems are battery powered vehicles and particularly battery powered road vehicles however it is understood that the same method may be applied analogy if the battery powered vehicles are replaced with e.g. battery packs for home use. While the types of general data, personalized data and predicted battery metric varies depending on the type of battery systems the method described herein may be applied analogously to stationary battery systems and vehicle battery systems.

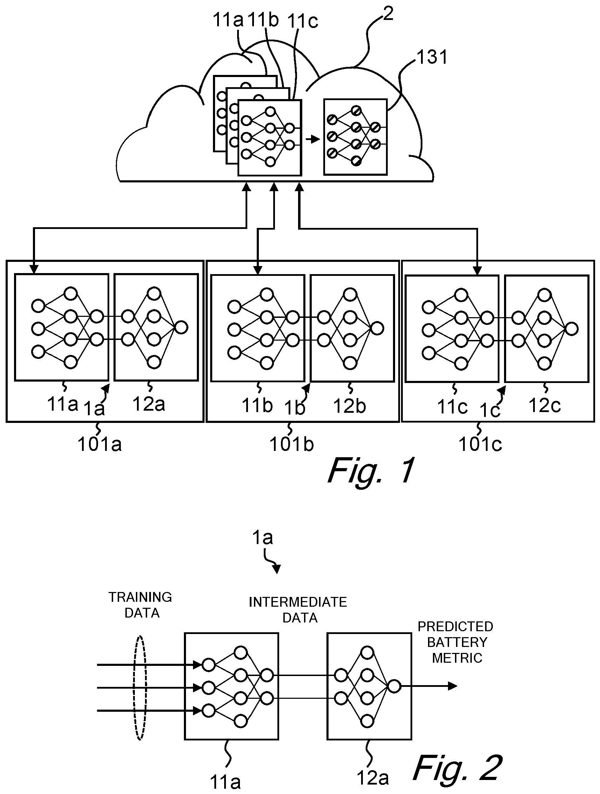

Fig. 1 is a block diagram illustrating schematically a plurality of at least partially battery powered vehicles 101a - 101c communication with a remote server 2. The remote server 2 may be a single server or a network or multiple server (e.g. the cloud). Each battery powered system e.g. a vehicle 101a - 101c is any type of vehicle which is at least partially propelled by electric energy stored in a battery onboard the vehicle 101a - 101c. Each vehicle 101a - 101c may e.g. be a road vehicle such as a car, truck or bus but is envisaged that aspects of the present disclosure may be used for other types of battery vehicles, such as seafaring vehicles or airborne vehicles.

The communication between each vehicle 101a - 101c and the remote server 2 may be established using a mobile data network, such as 5G, 4G or 3G.

Each vehicle 101a - 101c comprises a processor configured to implement a system specific machine learning, SSML model, which in the present context of vehicles be referred to as a vehicle specific machine learning, VSML, model 1a - 1c which is individual for each vehicle. The VSML models 1a - 1c are architecturally identical but, since they are trained individually in each vehicle, each VSML model 1a - 1c may comprise different learned parameters obtained during training. Furthermore, each VSML model 1a - 1c comprises two submodules, a general VSML submodule 11a - 11c and a subsequent personalized VSML submodule 12a - 12c.

Turning to Fig. 2, the VSML model 1a of a first vehicle 101a is shown in further detail. It is envisaged that the VSML model 1b - 1c of the other vehicles 101b - 101c is architecturally identical to the VSML model 1a. The VSML model 1a is configured to obtain training data as input data. The training data comprises personalized data, referred to as personalized vehicle data, and may optionally further comprise general data, referred to as general vehicle data. The personalized vehicle data may be more specific, personal or individual than the general vehicle data. For example, the personalized vehicle data indicates a current speed, trip length or acceleration whereas the general vehicle data indicates an average speed, trip length or acceleration standard deviation accumulated over a number of trips (e.g. more than ten trips). That is, the personal data may be data indicating a static or instantaneous property of the battery powered vehicle whereas the general data is an accumulated average property of the battery powered vehicle. Examples of general and personalized vehicle data are described below.

The training data is first input to the general VSML submodule 11a of the VSML model 1a which processes the training data to yield intermediate data. The parameters (e.g. the weights, biases, hyperparameters) of general VSML submodule 11a may first be initialized with group general VSML submodule or global general VSML submodule from the remote server.

The general VSML submodule 11a may act as a feature extractor which extracts high level features from the raw input data (e.g. indicating voltage, current, and temperature). The high level features capture general patterns and relationships that are common across most vehicles. The intermediate data, representing these extracted features, is in turn provided as input to the subsequent personalized VSMI, submodule 12a which processes the intermediate data to obtain output coefficients representing a predicted battery metric associated with the battery of the vehicle. The personalized VSML submodule 12a hereby learns to capture more vehicle specific aspects, as a complement to the public VSML submodule 12a which captures the more general aspects that are similar for many vehicles.

The output coefficients may indicate the predicted battery metric explicitly. Alternatively, the output coefficients may describe a predicted distribution of the battery metric, wherein the predicted battery metric is obtained by sampling the distribution described by the output coefficients.

The purpose of the general VSML submodule 11a in each VSML model is to learn general patterns and features that are common across all vehicles. The purpose of the personalized VSML submodule 12a is to learn device specific information and adapt the model to individual and current battery characteristics, unique for the vehicle in which the VSML model 1 is implemented.

The VSML model 1a, and its submodules 11a, 12a, may be implemented using any form of machine learning. For example, each submodule may comprise a neural network comprising a plurality of neural network nodes associated with one or more learnable parameters (also referred to as weights).

Hereby, the general and personalized VSML submodules 11a, 12a each comprise a set of learnable parameters that may be trained to enable the VSML model 1a as a whole to make accurate predictions of the battery metric based on vehicle data. The VSML model 1a may be used as an "online" model meaning that the VSML model 1a is both trained and used to predict battery metrics while being implemented in the vehicle. In contrast an "offline" model is trained until a final set of learned parameters is reached, whereby the model is used indefinitely with the final parameters as static parameters (only inference).

At this point, it is noted that machine learning models as such, and how they may be trained either "online" or "offline", are concepts which are understood by the person skilled in the art and details pertaining to the machine learning model and machine learning submodules will not be discussed in this disclosure.

In some implementations, a vehicle is driven regularly by two or more different drivers wherein each driver either selects his or her profile while driving or the driver is detected automatically. In such implementations, each vehicle may have two or more sets of personalized VSML submodules, each associated with a driver profile, wherein the personalized VSML submodule associated with the current driver is selected for training and generation of a predicted battery metric etc.

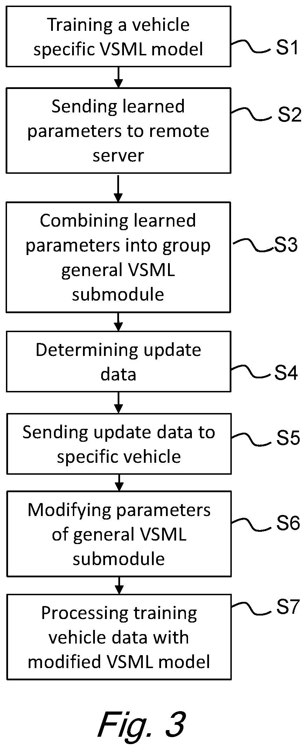

Turning back to Fig. 1, the arrows between the remote server 2 and each vehicle 101a - 101c indicate that data is transmitted from each vehicle to the remote server 2, and vice versa. With further reference to the flowchart in Fig. 3 a method for performing decentralized machine learning for a group of vehicles while maintaining privacy will now be described.

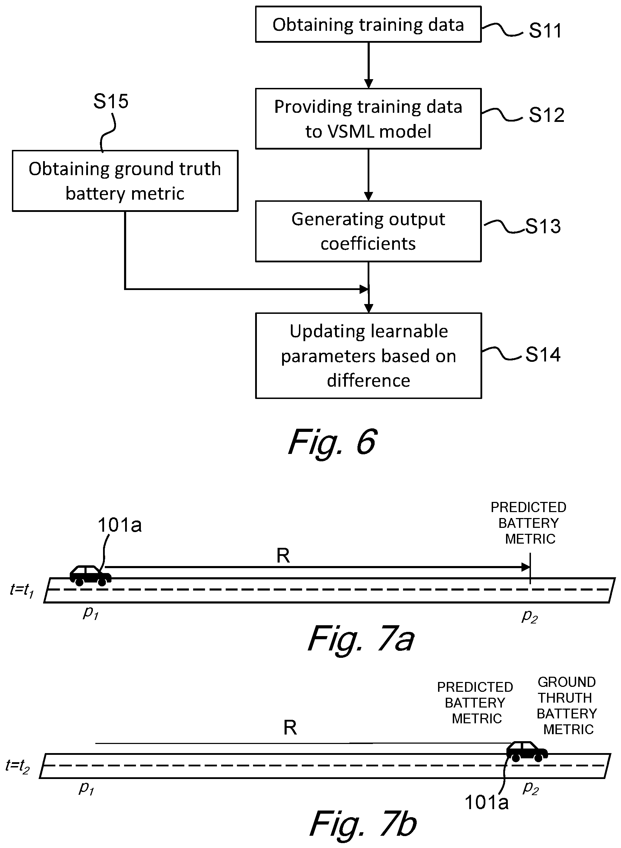

At step S1 the VSML model 1a - 1c of each vehicle 101a - 101c is trained. The training is performed individually for each vehicle 101a - 101c and after one or more training iterations each VSML model 1a - 1c (each of the two submodules 11a - 11c, 12a - 12c) will be populated by learned parameters. Since each VSML model 1a - 1c is trained using different sets of locally available training data it is expected that each VSML model 1a - 1c may be populated with slightly different learned parameters. The training in each vehicle is described in connection with Fig. 6.

The method then goes to step S2 wherein each vehicle 101a - 101c sends data to the remote server 2 describing the learned parameters of its respective general VSML submodule 11a - 11c. These learned parameters have been obtained by the online learning of the VSML model 1a - 1c which occurs in each vehicle respectively. Accordingly, the remote server 2 will obtain a plurality of different instances of the general VSML submodule corresponding to the general VSML submodules 11a - 11c.

Each vehicle 101a - 101c may send its learned parameters to the remote server regularly or intermittently. For example, each vehicle 101a - 101c may be configured to send its learned parameters on a regular basis, for example once per day or once per each 100 km traveled. Additionally or alternatively each vehicle 101a - 101c may be configured to send its learned parameters only when the parameters have changed sufficiently since the last time learned parameters were sent.

At step S3 the learned parameters from each vehicle 101a - 101c are combined in the remote server 2 to form a group general VSMI, submodule 131. The combination may be performed in a variety of different ways. As one example, the learned parameters of the general VSML submodule 11a- 11c of each vehicle 101a - 101c are denoted $\theta_{gen}^{(i)}$ with $i = 1$, 2, 3, ... $K$ wherein $K$ is the number of vehicles 101a - 101c and wherein the parameters of the group general VSMI, submodule 131, denoted $\theta_{gen}$, are determined by averaging as:

$$\theta_{gen} = \frac{1}{K} \sum_{i=1}^{K} \theta_{gen}^{(i)}. \tag{1}$$

Optionally, the parameters $\theta_{gen}$ of the group general VSMI, submodule 131 may be determined by weighted averaging of the learned parameters $\theta_{gen}^{(i)}$. For example, each set of learned parameters is weighted with a weighting factor $c_i$ wherein $\sum_{i=1}^{K} c_i = 1$. The weighting may be performed so as to provide a larger weight to learned parameters $\theta_{gen}^{(i)}$ originating from VSMI, models 1a - 1c which have gone through a larger number of training iterations, from VSMI, models 1a - 1c associated with a lower prediction error measure or from VSML models 1a - 1c which have been trained with data having a greater distribution.

Additionally, or alternatively, information about the way in which parameters of each general VSML submodule 11a- 11c is updated is provided to the remote server. For example, update gradient $g_{\theta_{gen}}^{(i)}$ for the general VSML submodule of vehicle $i$ may be determined as

$$g_{\theta_{gen}}^{(i)} = \nabla_{\theta_{gen}} \frac{1}{N_i} \sum_{j=1}^{N_i} L \left[ f\left( x_{i,j}; \theta_{gen}, \theta_{per}^{(i)} \right), y_{i,j} \right] \tag{2}$$

wherein $N_i$ is a number of training iterations of the VSML module, $L$ is the loss function, $f$ is a function representing the processing performed by the VSML module to obtain a predicted battery metric, $x_{i,j}$ is the training data, $\theta_{gen}$ is the parameters of the general VSML submodule, $\theta$ is the parameters of the personalized VSML submodule and $y_{i,j}$ the ground truth (measurement) data. Hereby, $g_{\theta_{gen}}^{(i)}$ from each vehicle 101a - 101c may be combined to form a group general VSMI, submodule 131. This combination may be performed similar to the combination in equation 1, to form the group update gradient G as

$$G = \sum_{j=1}^{N} w_j g_{\theta_{gen}}^{(j)} \tag{3}$$

wherein $w_j$ is a weighting factor which may be assigned based on the number of training iterations, amount of training data and/or distribution of the training data. The group update gradient G may then be used to update the group general VSML submodule. The contribution of each general VSML submodule may be measured by the cosine similarity between the local gradient $g_{\theta_{gen}}^{(i)}$ and the group gradient G.

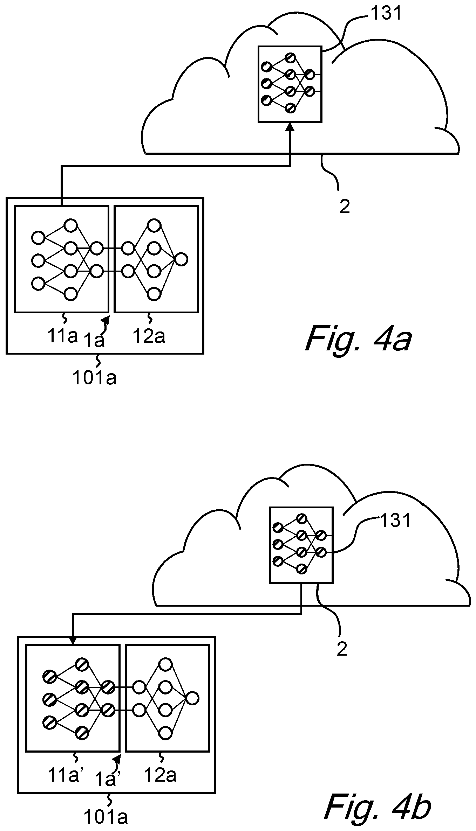

The group general VSML submodule 131 is hereby based on multiple individual sets of learned parameters from the general VSML submodule 11a - 11c from a plurality of vehicles. The group general VSMI, submodule 131 may therefore efficiently learn high level aspects quickly. Fig. 4a illustrates schematically how the learned parameters of the general VSML submodule 11a in vehicle 101a is transmitted to the remote server 2, allowing the remote server to form the group general VSMI, submodule 131 using one or more additional instances of the learned parameters for a general VSML submodule.

Turning back to Fig. 1 and the flowchart Fig. 3, the remote server 2 determines at step S4 update data, based on the group general VSML submodule 131, and sends the update data to at least one specific vehicle among the vehicles 101a - 101c at step S5. In general, the remote server 2 may send update data to a plurality (or all) of the vehicles 101a - 101c at the same time or at different times. However, for the purposes of this description it will be assumed that the update is transmitted to the first vehicle 101a (and a similar process may be repeated for each of the other vehicles).

The update data comprises information indicating how to update and/or train the VSML model 1a of the vehicle 101a such that the parameters of the general VSML submodule 11a will more closely resemble, or at least be biased towards, the group general VSMI, submodule 131. To this end, the update data may comprise the parameters of the group general VSMI, submodule 131. Since the group general VSMI, submodule 131 has the same architecture as the general VSML submodule 11a in the first vehicle 11a, the parameters of the general VSML submodule 11a may simply be replaced with those of the update data to obtain a modified general VSML submodule and by extension a modified VSML model. Hereby, step S6 involving modifying the learned parameters of the general VSML submodule 11a in the specific vehicle may comprise replacing the parameters of the general VSML submodule 11a with those of the group general VSMI, submodule 131. This is illustrated in Fig. 4b where the parameters of the group general VSMI, submodule 131 are transmitted to vehicle 101a to replace the parameters of the general VSML submodule to form a modified general VSMI, submodule 11a' and a modified VSMI, model 1a'.

However, step S6 of modification of the general VSML submodule 11a may be performed using methods other than replacement. For example, instead of directly replacing the parameters of the general VSML submodule 11a with those of the update data (i.e. $\theta_{gen}$) to form the general VSML submodule 11a' a weighted combination may be formed $\theta_{gen}^{(1)}$ wherein the parameters $\theta_{pub}^{(1)*}$ of the modified general VSMI, submodule 11a' are obtained as

$$\theta_{gen}^{(1)*} = a\theta_{gen} + (1-a)\theta_{gen}^{(1)}$$

wherein a is a constant on the interval 10, 11. As another example, the parameters $\theta_{gen}^{(1)*}$ of the modified general VSMI, submodule 11a' are obtained based on the difference between $\theta_{gen}^{(1)}$ and $\theta_{gen}$ as $\theta_{gen}^{(1)*} = \theta_{gen}^{(1)} + \eta\left(\theta_{gen} - \theta_{gen}^{(1)}\right)$ wherein $\eta$ is a scaling factor.

As another option, the update data indicating the parameters $\theta_{pub}$ of the group general VSML submodule 131 are used to steer the training of the VSML model 1a wherein the training process is penalized more for updating the parameters in the general VSML submodule 11a such that a deviation from the parameters $\theta_{gen}$ of the group general VSML submodule 131 increases compared to updating the parameters in the general VSML submodule 11a such that a deviation from the parameters $\theta_{gen}$ of the group general VSML submodule 131 decreases. For example,

$$\theta_{gen}^{(1)*} = \theta_{gen}^{(1)} + \eta\nabla L\left(\theta_{gen}, \theta_{gen}^{(1)}\right)$$

where $\eta$ is a learning rate that controls the update step size and $L\left(\theta_{gen}, \theta_{gen}^{(1)}\right)$ is a loss function describing a deviation between $\theta_{gen}$ and $\theta_{gen}^{(1)}$.

Irrespective of whether the update data is used to update the parameters of the general VSML submodule 11a directly, or indirectly via training, a modified VSMI, model 1a' will be formed in the vehicle 101a at least partially based on the parameters of the group general VSMI, submodule 131. The modified VSMI, model 1a' is then used at step S7 to, given training data, generate output coefficients representing the predicted battery metric. Due to the modified VSML model 1a' being at least partially based on the more general group general VSMI, submodule 131 it may generate output coefficients representing a more accurate predicted battery metric since it leverages the collective learning of all vehicles 101a - 101c that have contributed to the formation of the group general VSMI, submodule 131.

The sending of update data from the remote server to each vehicle 101a - 101c may be performed on a regular, intermittent or as-needed basis. In some implementations, the update data is sent to a specific vehicle 101a upon request by the specific vehicle 101a. As described below, the online training performed in each vehicle involves calculation of one or more error measures associated with the VSML module 1a as measure of the error (e.g. the deviation between the predicted battery metric and the ground truth battery metric). Hereby, each vehicle may be configured to, in response to the error measure exceeding a predetermined threshold, send a request to the remote server 2 to receive updated parameters from the remote server 2. The remote server 2 is further configured to, in response to receiving a request from the specific vehicle, transmit update data to the specific vehicle 101a.

Alternatively, the remote server 2 may be configured to automatically send update data to each vehicle once the group general VSML submodule has been updated.

For example steps S 1 - S3 may be repeated in aggregation epochs. In an aggregation epoch, the VSML models of each vehicle are trained at step S 1 and the parameters of the general VSML submodule is sent from each vehicle to the remote server at step S2, wherein the remote server collects the parameters of the general VSML submodule. Once a criteria has been met, the remote server optionally clusters the vehicles into groups (as explained below) and proceeds with step S3 involving combining the general VSML submodules of each group into a group specific general VSML submodule. The criteria may e.g. be an elapsed time during which the remote server has collected parameters or when a predetermined portion (e.g. 60%) of the vehicles have reported their parameters. At this stage, the remote server sends the update data to the vehicles or indicates to the vehicles that update data is available whereby the vehicles may request the update data. This concludes the aggregation epoch whereby a new aggregation epoch begins by repeating steps S 1 - S3 and sending update data to the vehicles or an indication that update data is available.

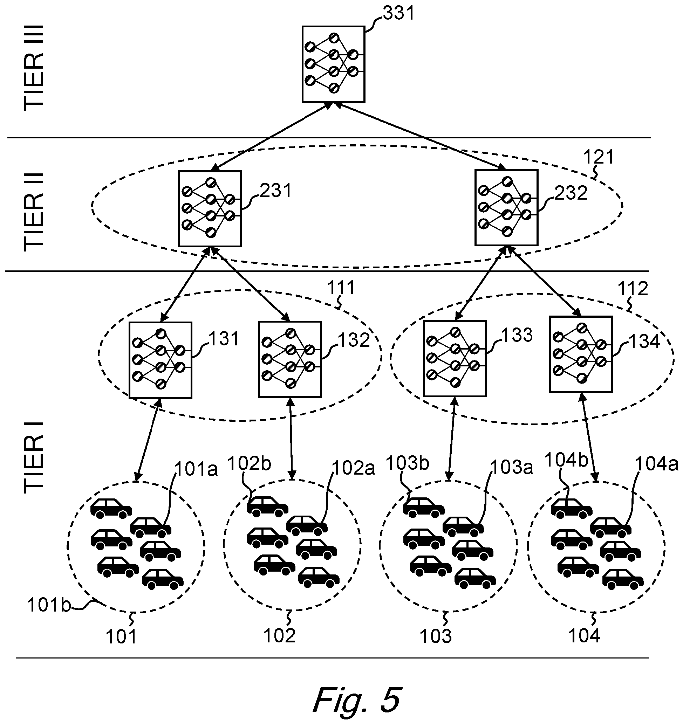

Fig. 5 illustrates schematically how the method of groupwise training with maintained anonymity and privacy described in connection with Figs. 1 - 4 above may be extend to a vehicle fleet wherein the vehicles are divided into a plurality of groups 101 - 104, each group comprising two or more vehicles 101a, 101b, 102a, 102b, 103a, 103b, 104a, 104b.

To separate a plurality of vehicles 101a - 104a, 101b - 104b forming the vehicle fleet into a plurality of groups 101 - 104 each vehicle 101a - 104a, 101b - 104b sends general vehicle data to the remote server. At the remote server, the vehicles 101a - 104a, 101b - 104b are clustered into a plurality of first tier groups 101 - 104 based on the general vehicle data of each vehicle 101a - 104a, 101b - 104b such that each first tier group comprises at least two vehicles.

As one example, K-means clustering may be performed to cluster the vehicles 101a - 104a, 101b - 104b into the first tier groups based on the general vehicle data. However, this is merely one example of how the clustering is performed. In general, general vehicle data may be converted into vectors and the clustering may be performed based on the vectors, to place similar vectors (e.g. having a high cosine similarity) in the same group.

This process may be repeated regularly whereby groups are allocated dynamically based on real-time analysis of vehicle and battery characteristics and operational conditions indicated by the general vehicle data, ensuring that similar vehicles are grouped together for effective collaborative learning. This dynamic clustering into groups adapts to changes in the environment and battery usage, optimizing the aggregation process and enhancing the accuracy of each VSML model by provision of a tailored general VSML submodule.

It is also noted that since the clustering may be dynamic over time, a vehicle 101a - 104a, 101b - 104b may be reassigned to a different first tier group 101 - 104 if e.g. the general vehicle data changes. That is, a vehicle 101a - 104a, 101b - 104b may belong to a first tier group 104 at first but be reassigned to a different first tier group 102 - 104 in response to the general vehicle data being updated.

As an illustrative example, a driver mainly uses his or her vehicle for commuting in a large city whereby the general vehicle data is expected to be similar to the general vehicle data of other vehicles used mainly in a large city and the vehicle is assigned to a first tier group associated with vehicles used in large cities. If the user moves to rural area and starts using the vehicle less frequently, but for longer trips, this will be reflected in the general vehicle data (e.g. the average trip length increases, the amount of regenerative breaking decreases etc.) whereby the vehicle may be assigned to a different first tier group associated with vehicles used in rural areas.

Additionally or alternatively, the vehicles 101a - 104a, 101b - 104b may be clustered into first tier groups 101 - 104 based on an evaluation of the cosine similarity between parameters in the general VSML submodule of each pair of vehicles or the cosine similarity between how the general VSML submodule of each pair of vehicles is updated. Accordingly, since each vehicle 101a - 104a, 101b - 104b sends the parameters of its general VSML submodule to the remote server, the parameters of these the general VSML module may be used to cluster the vehicles into first tier groups 101 - 104. For example, vehicles having learned parameters which are very similar (e.g. having a large cosine similarity) may be clustered into the same group. As another option, each vehicle may send information indication how its general VSML submodule has been updated (e.g. the gradient of the parameter updates) to the remote server, whereby the vehicles grouped such that vehicles being updated in a similar manner are grouped together.

Additionally, since each vehicle may repeatedly send its learned parameters of the general VSML submodule to the remote server, the remote server may maintain a history of learned parameters from each vehicle and determine e.g. a trend for how the learned parameters have changed and the clustering may be performed to place vehicles having a similar trend into the same first tier group.

To determine how similar two sets of parameters are a distance measure may be used. For two parameter sets $\theta_i$ and $\theta'_i$ wherein $i$ ranges from 0 to the number of parameters k a distance measure D between the two sets of parameters may be determined as:

$$D = \sqrt{\sum_i (\theta_i - \theta'_i)^2} \tag{4}$$

Of course, the clustering may be performed based on only the parameters of the general VSML submodule or only on other types of general vehicle data. It is also envisaged that the clustering may be weighted differently for different types of general vehicle data, e.g. an average ambient temperature of the general vehicle data may be provided with a greater weight for the clustering compared to e.g. the country of registration.

For each first tier group 101 - 104 the remote server maintains a respective first tier group general VSMI, submodule 131 - 134 which is formed by combining the parameters of the general VSML submodule from each vehicle in the respective first tier group 101 - 104. Since the first tier groups 101 - 104 are formed by clustering vehicles with similar general vehicle data and/or similar parameters in their general VSML submodule it is expected that each first tier group 101 - 104 comprises a homogenous collection of vehicles which increases the likelihood of learned parameters from one vehicle in the first tier group also being relevant for another vehicle in the same first tier group (transfer learning).

The method described in connection with Fig. 3 may further be employed for each first tier group respectively.

The remote server may further be configured to hierarchically cluster the plurality of first tier general VSML submodules 131 - 134 into two or more second tier groups 111, 112 wherein each second tier group 111, 112 is associated with a second tier general VSML submodule 231, 232. Similar to how the general VSML submodules of a plurality of vehicles 101a - 104a, 101b - 104b are combined to form the first tier general VSML submodules 131 - 134 the first tier general VSML submodules 131 - 134 are combined to form second tier general VSML submodules 231, 232. Each second tier general VSML submodule 231, 232 represents a higher level of generalization compared to the first tier general VSML submodules 131 - 134. For example, the parameters $\theta_{cluster}$ of a higher tier general VSML submodule may be calculated from the parameters $\theta_i$ of $K$ multiple lower tier general VSML submodules as

$$\theta_{cluster} = \frac{\sum_{i=1}^K n_i \theta_i}{\sum_{i=1}^K n_i} \tag{5}$$

wherein $n_i$ is a weighting factor which e.g. is equal to the number of vehicles associated with each lower tier general VSML submodule respectively.

The clustering of the first tier general VSML submodules into second tier groups may be based on an aggregation of general vehicle data of each first tier group. Different types of general vehicle data may be weighed differently for the different tier levels.

As an illustrative example, the first tier group 101 comprises vehicles associated with general vehicle data indicating aggressive driving behavior and typical charging as slow, e.g. overnight, charging and the first tier group first tier group 102 comprises vehicles associated with general vehicle data indicating defensive driving behavior and typical charging as slow charging. On the other hand, the first tier group 103 comprises vehicles associated with general vehicle data indicating aggressive driving behavior and typical charging as fast charging (e.g. dedicated DC charging stations) and the first tier group 103 comprises vehicles associated with general vehicle data indicating defensive driving behavior and typical charging as fast charging. The first tier groups 101 and 102 may then be grouped into a second tier group 111 for which a second tier general VSML submodule 231 is formed generalizing vehicles that typically use slow charging (irrespective of the driving behavior). Similarly, the first tier groups 103 and 104 may be grouped into a second tier group 112 for which a second tier general VSML submodule 232 is formed generalizing vehicles that typically use fast charging.

This structure, grouping a plurality of lower tier groups or lower tier general VSML submodules into a reduced number of higher tier groups may be repeated for an arbitrary number of tier levels. Fig. 5 shows three tier levels but is understood that in practical implementations there may be a larger number of tier levels.

At the highest tier level (the third tier level in Fig. 5) there is a single global general VSML submodule 331 formed by combining the parameters of the immediately lower tier level (the second tier level in Fig. 5). The two second tier general VSML submodules 231, 232 are clustered into a third tier group 121 and the parameters of each second tier general VSML submodule 231, 232 are combined in the remote server to form the global general VSML submodule 331. In the above, an illustrative example was presented wherein the vehicles are grouped based on average charging speed (slow or fast) and average behavior (aggressive or defensive), continuing this example the global general VSML submodule would generalize the parameters for all types of vehicles, irrespective of the typical speed of charging and the driving behavior.

The global general VSML submodule 331, or any group general VSMI, submodule 231, 232, 331 of the higher tiers may be used to set a starting value for the parameters of the general VSML module of a new vehicle. Over time, when more general vehicle data becomes available and/or the general VSML submodule of new vehicle has been trained, the vehicle may be assigned to a first tier group 101 - 104.

Fig. 6 is a flowchart illustrating a method for training the VSML model according to some implementations. The method may be repeated many times in each vehicle, whereby the parameters of the VSML submodules are progressively updated such that the VSML model as a whole becomes more accurate. In general, the training objective is to find the parameters $\theta_{gen}$ and $\theta_{per}$ of the general and personalized VSML submodules respectively that fulfill

$$\min_{\theta_{gen}, \theta_{per}} E_{(x_i, y_i)} \left[ L\big[ f\big( x_i; \theta_{gen}, \theta_{per} \big), y_i \big] \right] \tag{6}$$

wherein $L$ is the loss function, $f$ is the function representing the processing performed by the VSML module to obtain a predicted battery metric, $x_i, y_i$ is the ground truth data and E is an error function.

At step S11 training data is obtained. The training data may be obtained from sensors onboard the vehicle. The training data comprises personalized vehicle data (such as a current speed of the vehicle, a road inclination and a trip length). The training data may optionally further comprise general vehicle data (e.g. an average ambient temperature). The training data is provided as input to the VSML model at step S12 and at step S13 the VSML model predicts output coefficients representing a predicted battery metric $x_i$.

With further reference to Fig. 7a and Fig. 7b, a vehicle 101a is shown at time ti. At time ti the vehicle 101a is at position pi, and position $p_2$ is the target destination entered into the navigation system or a position along the route to the target destination. To reach the position $p_2$, the navigation system suggests route R. Steps S11, S12 and S13 may be performed at time ti using training data present at time ti (e.g. information regarding the position pi, information about the route R, the ambient temperature, a battery charge level at time ti etc.). Hereby, at time ti output coefficients representing the predicted battery metric $x_i$ may be obtained at time ti. The predicted battery metric may e.g. a predicted battery level remaining once the vehicle reaches position $p_2$.

The predicted battery metric obtained at time ti is stored until the vehicle reaches position $p_2$ at time $t_2 >$ ti. At time $t_2$ the vehicle obtains a ground truth battery metric associated with the predicted battery metric, in the flowchart of Fig. 6 this is represented with step S15. For example, the ground truth battery metric is the actual battery charge level at time $t_2$ when vehicle 101a arrives at position $p_2$. Now, the method may go to step S14 comprising updating the learnable parameters of the VSML model based on the difference between the predicted battery metric and the ground truth battery metric.

More specifically, the learnable parameters of the VSML model are updated so as to minimize the error function $E$ and/or loss function $L$ which is based on the difference between the ground truth battery metric $y_i$ and the predicted battery metric $x_i$. If the VSML model is implemented as a neural network the updating process may be based on a gradient decent process wherein the parameters are updated using an error backpropagation algorithm. In some implementations, the loss function L and/or error function E is further based on the parameters of the first tier group general VSMI, submodule whereby updating parameters in the general VSML submodule are penalized if the diverge from the first tier group general VSML submodule. This process may be repeated many times as the vehicle travels along route R, setting position $p_1$ to the current position and position $p_2$ to a position the vehicle is expected to reach in the near future (e.g. in 2 minutes or in 10 minutes (calibratable)).

Hereby, while it is only the parameters of the general VSML submodule of each vehicle which is shared with the remote server the general VSML submodule of each vehicle is trained together with the personalized VSML submodule in each vehicle.

In some implementations, the general VSML submodule is first initialized with parameters from the group general VSML submodule (of e.g. a first tier group or the global VSMI, submodule) before the training according to steps S11-S15 commences.

The training method described in connection with Fig. 6 is an example of supervised learning. In addition to, or as an alternative to, supervised learning, the training may comprise unsupervised learning. In unsupervised learning the learning objective is to cluster the output (i.e. the predicted battery metric) based on similarities in the input data. Notably, unsupervised learning may be performed without ground truth data. In some implementations, the training process performed in each vehicle involves both supervised and unsupervised learning (i.e. semi-supervised learning).

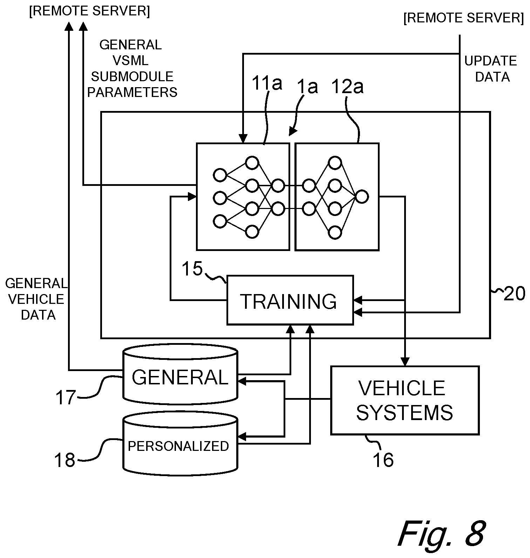

Fig. 8 is a block diagram illustrating a battery controller 20 for a vehicle according to some implementations. However, the same type of battery controller 20 may be used for other types of battery systems as well.

The battery controller 20 comprises a VSML model 1a having a general submodule 11a and a personalized submodule 12a. When the vehicle is used, the training module 15 repeatedly trains the VSML model 1a using training data as described in connection with Fig. 6. The training data comprises personalized vehicle data 18 and may optionally also comprise general vehicle data 17. Both the general and personalized vehicle data 17, 18 will in general change over time as the vehicle is used.

The general vehicle data 17 may also be communicated to the remote server (e.g. for clustering into first tier groups). Additionally, the parameters of the general VSML submodule 11a are transmitted to the remote server, allowing the remote server to combine multiple general VSML submodules into a first tier group VSMI, submodule. In some implementations, the gradient of an update of the parameters of the general VSML submodule 11a are transmitted to the remote server, allowing multiple vehicles to be clustered into groups based on the gradient of the parameter updates occurring in each vehicle.

The battery controller 20 also receives update data from the remote server, wherein the update data comprises at least one of information for forming a loss function penalizing parameter updates that deviate from the first tier group general VSMI, submodule parameters and information for updating the parameters of the general VSML submodule 11a such that it more closely resembles the first tier group general VSMI, submodule stored in the remote server. The information received from the remote server may accordingly be data explicitly signaling the parameter values of the first tier group general VSML submodule.

Hereby it is especially noted that the battery controller is configured to refrain from sharing any personalized vehicle data 18 with the remote server and refrain from sharing information linked to the personalized VSML submodule 12a. While the personalized VSML submodule 12a is trained together with the general VSML submodule 11a, and therefore will be indirectly influenced by the update data originating from the remote server, the personalized VSML submodule 12a will be local and induvial (i.e. personalized) for the vehicle 101a.

The vehicle comprises additional vehicle systems 16. The additional vehicle systems comprise one or more of a battery, a battery management system, an electric motor, a navigation system, an infotainment system, etc. One or more of these vehicle systems 16 (notably the battery, the battery management system and the navigation system) are sources for many types of vehicle data, general 17 as well as personalized 18. Additionally, these systems benefit from obtaining the predicted battery metric. For example, it is envisaged that the battery metric (e.g. estimated charge level when destination is reached, estimated range or estimated time until charging is complete) may be displayed for the driver using e.g. the infotainment system.

In the above, various examples of general vehicle data, personalized vehicle data and predicted battery metrics have been presented. It is noted that these are just examples and many other forms of general vehicle data, personalized vehicle data and predicted battery metrics may be used. Further examples are provided below, and the person skilled in the art will appreciate that the different types of (personalized or general) vehicle data may be combined or processed to form other types (personalized or general) vehicle data.

The predicted battery metric may comprise a predicted future battery charge level (e.g. expressed in percentage). The future battery charge level may be associated with a location the vehicle is travelling to or simply a time in the future. For example, rechargeable batteries are known to self-discharge over time and the predicted battery metric may be a predicted future charge level after the vehicle has been left unused for a predetermined period of time.

The predicted battery metric may comprise a predicted future driving range. For example, a future driving range may be an estimated range of the vehicle once the vehicle reaches its destination.

The predicted battery metric may comprise a battery-state-of-health (SoH). The battery SoH may e.g. indicate the remaining max capacity of the battery, an internal resistance of the battery or a level of degradation of the battery. The ground truth data may comprise a full charge capacity measurement from 0 to 100% state of charge.

The predicted battery metric may comprise a predicted remaining useful life of the battery. This involves estimating the time or (dis-)charging cycles left before the battery's performance degrades beyond a predefined threshold. This prediction relies on monitoring various battery parameters and applying advanced machine learning algorithms to model the degradation process, to be able to optimize battery usage and ensuring reliability and safety.

The predicted battery metric may comprise a predicted a future battery state-of-power. The state-of-power indicates how much power the battery is capable of delivering. The state-of-power may be expressed with an absolute value (e.g. in kW) or in relative terms with respect to a nominal power level or maximum available power. During training, the ground truth battery metric is an actual maximum power the battery can deliver.

The predicted battery metric may comprise a remaining charge time. While battery metrics associated with the battery capacity (or driving range) are important it is also important to accurately predict how much time is needed to charge the battery to a predetermined charge level. To this end, the predicted battery metric may be a predicted time remaining until the battery has been charged to a predetermined level. During training, the ground truth battery metric is an actual measured time it took to fully charge the battery or to charge the battery to a predetermined percent.

The predicted battery metric may comprise a maximum charging power. The maximum charging power the battery can accept may be determined even when the vehicle is not connected to a charger. For example information about the maximum charging the power the vehicle can accept may be provided to the driver, whereby the driver may select an appropriately dimensioned charging station. Also, maximum charging power estimation for batteries involves determining the highest charging current that can be safely applied without causing negative effects like lithium plating. This estimation considers factors such as battery temperature, state of charge, and the internal resistance of the cells. By accurately estimating the maximum charging power, it ensures rapid charging while maintaining battery health and longevity. During training, the ground truth battery metric is an actual measured maximum charging power measured during a charging stop.

The general (vehicle) data may comprise generalized information that is not specific for the vehicle, its battery and/or a single trip. In some implementations, the general vehicle data comprises data which is averaged over at least five trips, at least five charge cycles or over a predetermined driving distance or driving time.

For example the general data comprises environmental information such as an average environmental temperature, an average environmental humidity level. The general vehicle data may comprise a vehicle model, a country in which vehicle is registered, a battery model and a battery design capacity. However, preferably the general vehicle does not comprise a vehicle serial number or license number. This specific type of information may be considered sensitive and is generally of little use for the VSML model. The general vehicle data may comprise generalized driving behavior metric information. For example the general vehicle data may indicate an average driving behavior metric (e.g. in terms of aggressiveness) which may be quantified as a standard deviation of vehicle acceleration.

As a further example, the general vehicle data may comprise a generalized charging habit metric. A generalized charging habit metric may indicate the frequency of regular and/or intermittent charging and the use of fast chargers (e.g. above 50 kW) with respect to slow chargers (e.g. below 50 kW).

As another example, the general vehicle data may further comprise an average daily usage metric indicating one or more of an average daily usage, average trip length, and average speed.

As further examples the general vehicle data may comprise other properties of the vehicle such as to what extent electric regeneration is used (e.g. on average), the body type of the vehicle (e.g. sedan, SUV or bus), and total vehicle milage. The general vehicle data may indicate if a trailer is pulled by the vehicle and/or if a skybox is attached.

The general vehicle data may also comprise information pertaining to the learned parameters of the general VSML submodule or information regarding how the general VSML was updated during a training iteration (e.g. the gradient of the parameter updates).

The personalized vehicle data is more specific than the general vehicle data and relates e.g. to the current status of the vehicle.

For example, the personalized vehicle data may comprise a current battery voltage level, a current battery current level, a battery temperature, a battery state of charge, a battery charge cycle count, a battery internal resistance, a battery State-of-Health, SoH, and a battery power output.

The personalized vehicle data may further comprise a road gradient, road ascent level or road decent level. The personalized vehicle data may comprise a vehicle speed and environmental factors such as a wind speed, current temperature and current humidity. The personalized vehicle data may further comprise a detailed driving behavior metric and a detailed charging habit metric. For example, the detailed driving behavior metrics may include specific acceleration, braking habits, and route choices. Being part of the personalized vehicle data, this detailed information remains on the local device to ensure the model is finely tuned to individual usage patterns while kept private.

## Claims

1. A method for decentralized machine learning for a group of battery systems, the method comprising:

   for each battery system, in said group of battery systems, training a system-specific machine learning, SSML, model with training data comprising personalized data, the SSML model comprising two submodules, a general SSMI, submodule and a personalized SSML submodule, each submodule comprising a plurality of learnable parameters;

   sending, from each battery system in the group, the learned parameters of the general SSMI, submodule to a remote server;

   at the remote server, combining the learned parameters of a plurality of general SSML submodules into a group general SSML submodule;

   determining, based on the parameters of the group general SSML submodule, update data;

   sending the update data to a specific battery system in the group of battery systems;

   modifying the parameters of the general SSML submodule in the specific battery system based on the update data to form a modified SSML model; and

   processing, in the specific battery system, training data using the modified SSML model to generate output coefficients representing a predicted battery metric.

2. The method according to claim 1, wherein training the SSML model comprises:

obtaining the training data;
providing the training data as input to the SSML model;
generating, with the SSML model, output coefficients representing the predicted battery metric;
recording a ground truth battery metric associated with the predicted battery metric; and
updating the learnable parameters of the SSML model based on a difference between the ground truth battery metric and the predicted battery metric.

3. The method according to any of the preceding claims, wherein combining the learned parameters of a plurality of general SSML submodules comprises forming an average of the learned parameters from different battery systems or a weighted average of the learned parameters from different battery systems.

4. The method according to any of the preceding claims, wherein modifying the parameters of the general SSML submodule in the specific battery system based on the update data comprises at least one of:

changing the parameters of the general SSML submodule in the specific battery system by setting the parameters of the general SSMI, submodule to parameters of the update data;
changing the parameters of the general SSML submodule in the specific battery system by modifying the parameters of the general SSML with a gradient of a difference between parameters of the update data and a previous set of parameters of the general SSML submodule;
setting the parameters of the general SSMI, submodule to a combination of a previous set of parameters of general SSMI, submodule and parameters of the update data; and
training the SSML model with a loss function, the loss function imposes a penalty proportional to a deviation from parameters of the update data.

5. The method according to any of the preceding claims, wherein the general SSMI, submodule is arranged upstream of the personalized SSMI, submodule in each SSMI, model, wherein input data provided to the SSML model is processed first with the general SSMI, submodule to yield intermediate data, and wherein the intermediate data is provided to the personalized SSML model which generates output coefficients representing the predicted battery metric.

6. A method for performing decentralized machine learning for a fleet of battery systems, the method comprises:

sending, from each battery system in the fleet of battery systems, general data to the remote server;
at the remote server, clustering the battery systems in the fleet of battery systems into a plurality of first tier groups based on the general data of each battery system; and
performing the method according to any of the preceding claims for each first tier group of said plurality of first tier groups such that battery systems assigned to a same first tier group contribute to the formation of the first tier group general SSML submodule and receive updated parameters based on the first tier group general SSML submodule.

7. The method according to claim 6, wherein the plurality of first tier groups are partitioned into at least two second tier groups based on the general data, the method further comprising, for each second tier group:

combining the parameters of each first tier group general SSML submodule of a first tier group associated with the second tier group, into a second tier group general SSML submodule;
determining, based on the second tier group general SSML submodule, a set of first tier update parameters; and
modifying the first tier group general SSML submodule based on the first tier updated parameters.

8. The method according to claim 6 or claim 7, further comprising:

combining the parameters of a plurality of first tier group SSML submodules into a global SSMI, submodule;
wherein determining the update data is further based on the parameters of the global SSMI, submodule.

9. The method according to any of claims 6 - 8, further comprising:
initializing the general SSML submodule with parameters from the global SSMI, submodule or from a first tier group general SSML submodule.

10. The method according to any of claims 7 - 10, further comprising:
in each battery system of the fleet of battery systems, extracting general data by generalizing and/or anonymizing personalized data, wherein generalizing and/or anonymizing personalized data comprises at least one of:

   removing personal identifiers from the personalized data;
   augmenting and/or permutating the personalized data;
   removing exact location information from the personalized data; and
   computing a statistical generalization of the personalized data.

11. The method according to any of claims 7 - 10, wherein the clustering is performed to assign battery systems with similar general data to a same first tier group and assign battery system with dissimilar general data to different first tier groups.

12. The method according to any of claims 7 - 11, wherein the battery system is a battery powered road vehicle and wherein the general vehicle data comprises at least one of:
an average environmental temperature, an average environmental humidity level, a vehicle model, a country in which vehicle is registered, a battery model, a battery design capacity, generalized driving behavior metric, a generalized charging habit metric, an average daily usage metric, an average trip length, an average speed, the body type of the vehicle, a total vehicle milage, learned parameters of the general VSML submodule, and information regarding how the general VSML was updated during a training iteration.

13. The method according to any of the preceding claims, wherein the predicted battery metric is at least one of: a predicted future battery charge level, a predicted future driving range, a battery state-of-health, a remaining useful life, a future battery state-of-power, a remaining charge time and a maximum charging power.

14. The method according to any of the preceding claims, wherein the personalized vehicle data comprises at least one of: a current battery voltage level, a current battery current level, a battery temperature, a battery state of charge, a battery charge cycle count, a battery internal resistance, a battery power output, a vehicle speed, a road gradient, road ascent level, road decent level, a vehicle load, a number of passengers, wind speed, a current temperature and a current humidity.

15. A battery controller for a battery system, the battery controller comprising a processor and memory, wherein the battery controller is configured to:

   train a system specific machine learning, SSML, model with training data comprising personalized data, the SSML model comprising two submodules, a general SSML submodule and a personalized SSML submodule, each submodule comprising a plurality of learnable parameters,
   send the learned parameters of the general SSMI, submodule to a remote server located externally of the battery system,
   receive, from the remote server, update data,
   modify the parameters of the general SSML submodule based on the update data to form a modified SSML model, and
   process training data using the modified SSML model to generate output coefficients representing a predicted battery metric.

Fig. 1

Fig. 2

Training a vehicle
specific VSML model ⟶ S1

Sending learned
parameters to remote ⟶ S2
server

Combining learned
parameters into group ⟶ S3
general VSML
submodule

Determining update
data ⟶ S4

Sending update data to ⟶ S5
specific vehicle

Modifying parameters
of general VSML ⟶ S6
submodule

Processing training ⟶ S7
vehicle data with
modified VSML model

*Fig. 3*

*Fig. 4a*

*Fig. 4b*

*Fig. 5*

```
┌─────────────────────────┐
│  Obtaining training data │ ～ S11
└─────────────────────────┘
            │
            ▼
┌─────────────────────────┐
│   Providing training data│ ～ S12
│      to VSML model       │
└─────────────────────────┘
            │
            ▼
┌─────────────────────────┐
│    Generating output     │ ～ S13
│      coefficients        │
└─────────────────────────┘
            │
            ▼
┌─────────────────────────┐
│   Updating learnable     │
│  parameters based on     │ ～ S14
│       difference         │
└─────────────────────────┘
```

S15

Obtaining ground truth battery metric

## Fig. 6

101a

PREDICTED BATTERY METRIC

R

$t=t_1$

$p_1$     $p_2$

## Fig. 7a

PREDICTED BATTERY METRIC

GROUND THRUTH BATTERY METRIC

R

$t=t_2$

$p_1$     $p_2$

101a

## Fig. 7b

[REMOTE SERVER]

GENERAL
VSML
SUBMODULE
PARAMETERS

[REMOTE SERVER]

UPDATE
DATA

11a  1a  12a

GENERAL
VEHICLE
DATA

15

TRAINING

20

17

GENERAL

18

PERSONALIZED

VEHICLE
SYSTEMS

16

*Fig. 8*

| Europäisches Patentamt European Patent Office Office européen des brevets | **EUROPEAN SEARCH REPORT** | **Application Number** EP 24 18 9429 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 350 369 A (UNIV NORTHWESTERN POLYTECHNICAL) 5 January 2024 (2024-01-05) * paragraph [0006] * * paragraph [0023] * * figure 2 * | 1-15 | INV. G06N3/098 G06N20/00 |
| A | DAI YUEYUE ET AL: "Federated Deep Reinforcement Learning for Task Offloading in Digital Twin Edge Networks", IEEE TRANSACTIONS ON NETWORK SCIENCE AND ENGINEERING, IEEE, vol. 11, no. 3, 7 January 2024 (2024-01-07), pages 2849-2863, XP011968580, DOI: 10.1109/TNSE.2024.3350710 [retrieved on 2024-01-08] * Sections I, III.A * | 1-15 | |

TECHNICAL FIELDS
SEARCHED (IPC)

G06N

The present search report has been drawn up for all claims

| Place of search | Date of completion of the search | Examiner |
|---|---|---|
| The Hague | 3 March 2025 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 18 9429

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | Publication date |
|---|---|---|---|
| CN 117350369 A | 05-01-2024 | NONE | |

EPO FORM P0459

For more details about this annex : see Official Journal of the European Patent Office, No. 12/82